# EUROPEAN PATENT APPLICATION

(11) **EP 2 384 031 A1**
(43) Date of publication of application: **02.11.2011**
(21) Application number: 10166728.5
(22) Date of filing: 21.06.2010
(51) Int. Cl.: H04W 4/12, H04L 12/18, G06Q 30/00

(54) **System and method for distributing messages to communicating electronic devices based on profile characteristics of users of the devices**

(30) Priority: 27.04.2010 US 768180
(71) Applicant: RESEARCH IN MOTION LIMITED, Waterloo, Ontario N2L 3W8 (CA)
(72) Inventor: Scott, Sherryl Lee Lorraine, Waterloo Ontario N2L 3W8 (CA); Knowles, Michael, Waterloo Ontario N2L 5Z5 (CA); Kaul Bhavuk, Redwood City, CA 94065-1183 (US); Marks, Bradley Michael, Mississauga Ontario L4W 0B5 (CA)
(74) Representative: Moore, Barry

(57) **Abstract**

The present disclosure related to a system, method and device for distributing messages to electronic devices is provided. The method comprises: identifying two devices that have been communicating with each other and that have at least one common attribute; identifying an advertisement campaign that matches the at least one common attribute; and transmitting a set of advertisements relating to the advertisement campaign to the two devices.

## Description

### FIELD OF DISCLOSURE

The disclosure described herein relates to a system and method for distributing messages and / or content to a group of electronic devices, such as mobile electronic communication devices.

### BACKGROUND

Currently, advertisements and other messages are transmitted to mobile communication devices. The number of advertisements provided can be overwhelming to the users of the devices. Advertisements are provided to devices without consideration as to the recipients.

There is a need for a system and method which addresses these deficiencies.

### BRIEF DESCRIPTION OF THE DRAWINGS

Embodiments of the present disclosure will now be described, by way of example only, with reference to the accompanying drawings, in which:

Fig. 1 is a schematic diagram of devices in a communication network, where the network includes a media server that provides communications to a group of devices in an embodiment;

Fig. 2A is a Venn diagram of a group of devices of Fig. 1 that are communicating with each other, showing their interests mapped against media provided by the media server of Fig. 1;

Fig. 2B is another Venn diagram of a group of devices of Fig. 1 that are communicating with each other, showing their interests mapped against advertisements provided by the media server of Fig. 1;

Fig. 3 is a flowchart of exemplary processes executed by the media server of Fig. 1, as it identifies medium to send to the group of devices of Fig. 1;

Fig. 4 is a schematic representation of a device in the group of devices of Fig. 1;

Fig. 5 is a block diagram of certain internal components of the device in Fig. 4;

Fig. 6 is a block diagram of two movement detection systems of in the device of Fig. 4; and

Fig. 7 is a block diagram of components of the media server of Fig. 1.

### DETAILED DESCRIPTION OF AN EMBODIMENT

The description which follows and the embodiments described therein are provided by way of illustration of an example or examples of particular embodiments of the principles of the present disclosure. These examples are provided for the purposes of explanation and not limitation of those principles and of the present disclosure. In the description which follows, like parts are marked throughout the specification and the drawings with the same respective reference numerals.

In a first aspect, a method for distributing messages to electronic devices is provided. The method comprises: identifying two users whom have been communicating with each other via two devices and where the two users have at least one common attribute determined by some manner; identifying a media, such as an advertisement campaign, that matches the at least one common attribute; and transmitting a set of media, such as a set of advertisements, relating to the advertisement campaign to the two devices. This may be distilled to identifying two devices where data associated with the two devices (which may relate to attributes of the related users) have at least one common attribute; identifying an advertisement campaign that matches the at least one common attribute; and transmitting a set of advertisements relating to the advertisement campaign to the two devices.

The method may further comprise: utilizing additional data relating to the two devices to determine an activity state for at least one of the users of the two devices; and identifying a format of an advertisement in the advertisement campaign to be included in the set of advertisements based on the additional data.

In the method, the at least one common attribute may relate to a preference provided from a social network site.

In the method, the at least one common attribute may be a threshold of common contacts shared by users of accounts for the social network site for the two devices.

In the method, after transmitting the advertisement to the device, the advertisement may be generated on the device. For example, audio/visual components of the advertisement may be provided to output devices (e.g. speakers, displays, lights, etc.). Alternatively or additionally, part or all of the advertisement may be constructed on the device from data and source information that an advertisement server sends to it.

In the method, a first member in the group may be provided with a first advertisement based on its activity state and a second member in the group may be provided with a second advertisement based on its activity state.

In the method, identifying two users that have been communicating with each other through two devices and that have at least one common attribute may comprise: examining a record of a communication is sent by a sending device to identify the recipients of the communication; identifying an attribute associated with the sending device; identifying a receiving device of the communication; determining whether the receiving device has a matching attribute to the attribute associated with the sending device; and identifying the sending device and send receiving device as the two devices if the receiving device has a matching attribute to the attribute associated with the sending device.

In the method, identifying an advertisement campaign that matches the at least one common attribute may comprise initiating a query to find an advertisement in a database of advertisement campaigns that matches the at least one common attribute.

In the method, the activity state for the first member may relate to a location of the first member.

In the method, the activity state for the first member may relate to movement data of the first member.

In the method, if the movement data indicates movement of the first member that exceeds a speed threshold then the advertisement may include an audio component; and if the movement data indicates movement of the first member that does not exceed the speed threshold then the advertisement may provide audio and visual components.

In the method, if the activity state indicates that the first member is associated with a driver of a vehicle then the advertisement may include only an audio component.

In the method, identifying two users that have been communicating with each other through two devices may comprise using cluster analysis to identify the two devices from a larger group of devices to analyze a number of overlapping interests between any two devices in the larger group to identify the two devices.

In the method, the two devices may have been communicating through asynchronous communications.

In the method, the two devices may have been communicating through synchronous communications.

In a second aspect, a server for distributing messages to electronic devices is provided. The server comprises: an activity analysis module for identifying two users of two devices that have been communicating with each other and where the two users have at least one common attribute; and identifying a first media campaign, which may be an advertisement campaign, that matches the at least one common attribute; and a media transmission module, which may be an advertisement transmission module, for transmitting a set of advertisements relating to the advertisement campaign to the two devices.

In the server, the activity analysis module may utilize additional data relating to the two devices to determine an activity state for at least one of the users of the two devices; and may identify a format of an advertisement in the advertisement campaign to be included in the set of advertisements based on the additional data.

In the server, the at least one common attribute may relate to a preference provided from a social network site.

In the server, at least one common attribute may be a threshold of common contacts shared by users of accounts for the social network site for the two devices.

In the server, a first member in the group may be provided with a first advertisement based on its activity state and a second member in the group may be provided with a second advertisement based on its activity state.

In the server, the activity analysis module may identify the two devices that have been communicating with each other by: examining a record of a communication is sent by a sending device to identify the recipients of the communication; identifying an attribute associated with the sending device; identifying a receiving device of the communication; determining whether the receiving device has a matching attribute to the attribute associated with the sending device; and identifying the sending device and send receiving device as the two devices if the receiving device has a matching attribute to the attribute associated with the sending device.

In the server, identifying an advertisement campaign that matches the at least one common attribute may comprise initiating a query to find an advertisement in a database of advertisement campaigns that matches the at least one common attribute.

In the server, the activity state for the first member may relate to a location of the first member.

In the server, the activity state for the first member may relate to movement data of the first member.

In the server, if the movement data indicates movement of the first member that exceeds a speed threshold then the advertisement may include an audio component; and if the movement data indicates movement of the first member that does not exceed the speed threshold then the advertisement may provide audio and visual components.

In the server, if the activity state indicates that the first member is associated with a driver of a vehicle then the advertisement may include only an audio component.

In the server, the attribute analysis module may use cluster analysis to identify the two users of the two devices from a larger group of devices to analyze a number of overlapping interests between any two users of the two devices in the larger group to identify the two devices.

In the server, the two devices may have been communicating through asynchronous communications.

In the server, the two devices may have been communicating through synchronous communications.

In other aspects, various combinations of sets and subsets of the above aspects are provided.

Generally, an embodiment provides a device, system and method to distribute and manage communications and/or media that are provided to an electronic device, such as, but not limited to, a (portable) wireless communication device, a handheld electronic device, a laptop computer or a personal computer. To assist with an understanding of an exemplary practical application of a system and method in accordance with the present teaching, the media items that may be transmitted will be described with reference to one exemplary media item type, that of advertising content. A communication and / or media can be an advertisement. Generally an advertisement may contain any one or more of a text message, indicator, graphic, sound or other audio/visual content. An advertisement may be provided to the device in various forms and media, including as a message (for example, an email, a text message, or a voice mail message), as an embedded link in a website page that is accessed to the device, as a streamed content to the device. Also, all or part of an advertisement may be generated on the device using data provided to it. Also, an advertisement may be embedded and / or integrated into an application such that the advertisement is generated on the device without any request or further action required by a user of the device. For example, an advertisement may be generated as a visual output within a web page or as an output while an application is operating (e.g. as a banner during a telephone call). For the sake of convenience, and not limitation, the terms "advertisement" and "message" as used herein include any data or communication that is provided to the device. A purpose of distributing the advertisement may be to promote a particular ware, service or event. An advertisement may be provided through one or more servers logically connected to the network. However, an advertisement may also be provided from other devices in the network. A message may include any communication between devices that includes an advertisement.

One feature of an embodiment provides an advertisement to one or more devices that are communicating with each other. The two devices are associated with two users. In particular, for the communicating devices, an analysis is performed to identify profile characteristics of the related users, such as interests/preferences/settings/topics/etc., that may represent a common attribute among the users of the communicating devices. Based on the set of identified common attributes, various advertisement campaigns are reviewed to identify a set of campaigns that overlap with the common attributes for the two users. Then, for the overlapping campaigns, one or more advertisements are sent to members devices that are associated with members in the group. Different advertisements may be sent to devices associated with the members in the group depending on their current level of communications. A level of communication of a device reflects the current and recent usage of the device. If the device has been receiving and/or sending a certain amount communications in a recent timeframe, then this level of activity may be deemed sufficient to receive one format of an advertisement over another format. If the device has been receiving and/or sending a lower amount communications in the timeframe, then another format of the advertisement may be provided to it.

For the purposes of consistency for this disclosure, the term "group of devices" is meant to represent a collection of devices, regardless of how they have been identified, that is being analyzed to identify overlapping interests or characteristics to a set of devices in that group that are receive advertisements from an advertising campaign, unless the disclosure indicates otherwise. A common interest/setting/preference/location/topic/characteristic etc. of two users of devices may sometimes be referred to generally as a common attribute associated with the users of the two devices. However, the attribute of the user may be associated with the device itself via a setting in the device or a setting associated with a user of the device.

In one embodiment, advertisements are provided to the group of devices through a network. The advertisements are processed by an application or module provided in software, firmware or hardware on an advertisement server in the network. Alternatively, the advertisements may be stored and processed in the devices. Additionally, aspects of the application and module can be split between the devices and one or more servers.

Now, a description is provided of a network and exemplary communication devices that have access to servers in the network, including an advertisement server, according to an embodiment. Thereafter, specific features of an embodiment are discussed.

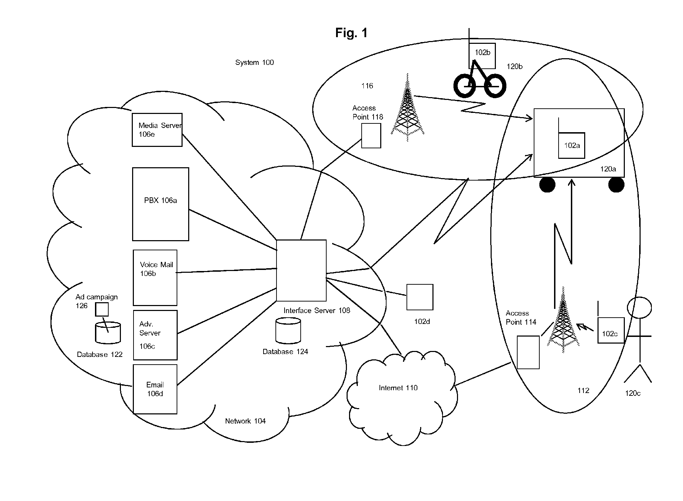

Referring to Fig. 1, system 100 shows device 102a in communication with network 104. Device 102a is a communication device having one or both data and voice communication capabilities; it may be a multiple-mode device capable of voice, data and other types of communications. Device 102a may be a wireless handheld device, cell phone, smart phone, personal digital assistant (PDA), and/or computer (either desktop or portable) having a (wireless) network card, network adapter and/or network interface controller (NIC) installed therein.

Device 102a may include a short-range communication sub-system that enables communication between device 102a and other proximate systems or devices, which need not necessarily be similar devices. For example, the short-range communication sub-system may include an infrared device and associated circuits and components, or a Bluetooth (trade-mark) communication module to provide for communication with similarly enabled systems.

Device 102a may further include a movement detection module (described later), which may be used to determine speed and acceleration of device 102a. Device 102a may also have a global positioning system (GPS) module (described later) that receives signals from one or more satellites, thereby allowing a location of the device to be calculated using triangulation techniques.

Device 102a may have radio frequency identification (RFID) capabilities, and thus device 102a may include an RFID transponder and / or an RFID reader. RFID uses radio waves to automatically identify objects, which may be done in several ways. An exemplary identification technique stores identification data, which may include a serial number, that identifies device 102a on a storage device, such as a microchip, that is in communication with the RFID transponder inside device 102a. An RFID reader enables an RFID transponder that is within the RFID reader's range to transmit the stored identification data to the RFID reader. The range of an RFID reader may depend on its power output and the radio frequency used. The RFID reader may receive and convert the radio waves transmitted by the RFID transponder into digital information which may then be processed by a processor on device 102a or a related server.

Other devices 102 (notably devices 102b, 102c and 102d) may have any or all of the features of device 102a.

Returning to Fig. 1, device 102a is shown in system 100 as communicating with several networks, each of which may be implemented in any known network architecture topology. Exemplary networks are described below.

Network 104 provides a suite of applications, services and data to its connected devices (e.g., device 102a) through its associated servers 106a, 106b, 106c (collectively "application servers 106"). Interface server 108 is provided as one common collection and communication point for application servers 106 to components outside of network 104. Devices (such as device 102a) connect to network 104 through wireless connections or through an external connection through Internet 110.

Wireless network 112 provides a communication link for device 102a to network 104. Network 112 also provides communications between device 102a and device 102c. Wireless network 112 may be a data-centric network, a voice-centric network, or a dual-mode network. In one embodiment, wireless network 112 is implemented as a Wi-Fi network generally following standards set by the IEEE LAN/MAN Standards Committee, known as IEEE 802, through its working group "II". The 802.11 standard defines media access control (MAC) and physical (PHY) layers in the Open Systems Interconnection (OSI) protocol model for WLAN. Wireless network 112 includes an antenna and supporting radio transmission equipment known to those skilled in the art. Access point (AP) 114 is shown in network 104 and in an embodiment AP 114 is an IEEE 802.11 radio receiver/transmitter (or transceiver) and functions as a bridge between network 112 and network 104.

Cellular network 116 provides device 102a with another communication network allowing it to communicate with network 104. The coverage area of network 116 may overlap with the coverage areas of network 112. Cellular network 116 provides voice and data services to devices 102. Data-centric technologies for cellular network 116 include the Mobitex (trademark) Radio Network ("Mobitex") and the DataTAC (trademark) Radio Network ("DataTAC"). Voice-centric technologies for cellular network 116 include Personal Communication Systems (PCS) networks like Global System for Mobile Communications (GSM) and Time Division Multiple Access (TDMA) systems. Certain networks provide multiple systems. For example, dual-mode wireless networks include Code Division Multiple Access (CDMA) networks, General Packet Radio Service (GPRS) networks, and so-called third-generation (3G) networks, such as Enhanced Data rates for Global Evolution (EDGE) and Universal Mobile Telecommunications Systems (UMTS). Other network communication technologies that may be employed include, for example, Ultra Mobile Broadband (UMB), Evolution-Data Optimized (EV-DO), High Speed Packet Access (HSPA), Evolved High Speed Packet Access (HSPA+), etc. Access point 118 may provide an interface communication point between network 116 and network 104.

As noted an embodiment provides tailored communications to devices 102 that have users that are part of a predetermined group that have overlapping interests (or attributes or setting) with comparable parameters for an advertisement campaign. As an example, exemplary users of devices 102 are shown in three different environments in Fig. 1, which may be used, in part, to determine whether their interests/settings/ parameters overlap with comparable interests/settings/parameters of other users of other devices 102. Each environment is discussed in turn.

First, user of device 102a is shown as being located in vehicle 120a. As such, the user of device 102a is either the driver of vehicle 120a or a passenger. Vehicle 120a, in its normal operation, drives in urban or non-urban environments, such as on defined roads and highways, in forests etc. On the determination that device 102a is in vehicle 120a, this environment provides one context for advertisements for the user of device 102a depending on whether the device is associated with a driver or a passenger (and which passenger) of vehicle 120a. Other passengers in vehicle 120a may also have devices 102 (not shown) etc. Contexts of "friends" may be made among occupants (driver and sets of passengers) in a vehicle. An embodiment may distinguish between deemed passengers in a vehicle and a driver of the vehicle. In some advertisement campaigns, passengers in a vehicle may be a preferred target audience than the driver, as passengers may have more time and less distractions to receive and review advertisements. As such vehicle 120 (which may be a car, train, plane, boat, etc.) may have a collection of devices 102 therein.

Second, system 100 shows user of device 102b that is located on bicycle 120b. As such, the user of device 102b is typically the operator of bicycle 120b (although on a tandem bicycle, the user may be a passenger). Bicycle 120b, in its normal use, is pedalled in urban and non-urban environments, such as on defined roads, on trails and in fields. On the determination that user of device 102b is with bicycle 120b, this environment provides another context for advertisements for user of device 102b.

Third, system 100 shows device 102c as being carried by user 120c. User 120c may be walking, jogging, standing, sitting at a desk, eating in a restaurant, exercising at a gym, at home watching television, etc. On the determination that device 102c is with user 120c, this environment provides yet another context for advertisements for user of device 102c. User 120c may be walking with another user, having a separate device 102 (not shown).

Device 102d is a laptop computer communicating directly with network 104. Notably, location and speed data for device 102 may be determined based on the received location signals, such as those from a GPS module, using methods and applications known in the art.

Turning to network 104, further detail is provided on exemplary application servers 106 therein. Each server may communicate directly with elements communicating within network 104 (such as device 102 and other application servers 106).

Private Branch Exchange (PBX) server 106a provides a messaging client allowing device 102 to establish local voice and data transmissions within network 104 and with exterior devices and networks. PBX server 106a provides a connection with a PSTN (not shown) for routing incoming and outgoing voice calls for network 104 and its associated enterprise. On one side, PBX server 106a is connected to an external telephone system, such as the PSTN, via direct inward dialling (DID) trunks. In an embodiment, PBX server 106a may use ISDN signalling protocols for establishing and breaking circuit-switched connections through the PSTN and related signalling and communications.

Voice mail server 106b provides storage, retrieval and processing of voice mail data files which may be processed by PBX server 106a or a VoIP (Voice over Internet) system (not shown) associated with network 104. Voice mail server 106b may also notify the user when a voice mail message is left in his mailbox.

Media (or advertisement) server 106c provides storage and forwarding of advertisements to devices and / or servers in network 104. The advertisements, in one example, are received from one or more advertising networks (not shown) in communication with the advertisement server 106c. Advertisement server 106c provides a platform that gathers environment data from persons and determines what advertisements to provided to them. In a specific embodiment an advertisement is provided to a person, through his/her related device 102. Data stored in device 102 may provide context data for the current interests and state of activity of the user. For example, data on the current motion of devices 102 can be used to represent the current state of activity of the associated user. An embodiment can selectively identify and distribute formats of advertisement to devices 102 and / or servers in network 104 based on this deemed current state of activity of the user. Database 122 may be associated with server 106c and may contain advertisements and data relating to advertising campaigns 126 that are to be selectively distributed to devices 102. It will be appreciated that in the description provided herein, a state of a person may be reflected by information tracked/stored/derived from the person's associated device 102. A person that has a device 102 may be referred to a user of that device 102.

Email server 106d provides storage, retrieval and processing of emails, SMS, MMS and other data files which may be processed by network 104. Other application servers 106 may be provided (e.g. video streaming servers, etc.).

As a common point of interface between elements in network 104 and communicating elements, such as device 102, interface server 108 is provided that communicates within network 104 with each application server 106 and provides a "gateway" interface connection to external entities, such as device 102, network 116 and network 112. In one embodiment, all communications between device 102 and application servers 106 are processed through interface server 108. Each application server 106 may have an independent connection to the external entities as well. Database 124 is associated with interface server 108 and may contain configuration data for devices 102 and application servers 106, allowing communications to be conducted through application server 106. It will be appreciated that in some configurations, interface server 108 is provided as a logical entity that may contain several modules responsible for various aspects of the interface with the devices 102, such as email processing, web browsing processing, advertising, attachment serving, etc.

With components of an exemplary network identified, further detail is provided on notable features of embodiments.

One embodiment analyses attributes of a group of persons to determine whether they are candidates to receive an advertisement from server 106c. For example, the persons that share some common attribute identified from a social group network site, such as Facebook (trade-mark) or Twitter (trade-mark) may be targeted for an advertisement, which may be sent to their associated devices. Alternatively, a common attribute for the group of users may be related to their devices that relate to certain network connection parameters or devices having shared preference settings (e.g. same time zone settings, same owner, same surname, same postal code setting, etc.). Various combinations and weightings individual of the attributes may be provided.

One factor for the analysis that may be considered is whether the devices have been communicating with each other. If an advertisement is sent to two (or more) devices that have recently been in a communication dialogue, the users may quickly share and comment on the advertisement. A device may have been communicating with other devices through various communication systems (e.g. cellular calls, voicemail messages, emails, text messaging, instant messaging etc.). The device may have been communicating with one or more devices. Some communications may have been broadcast to all devices in the group. Others may have been sent as a point-to-multipoint communication. Communications may be initiated in one format (e.g. email) and continued in another format (e.g. text messaging). It is not required that the devices be communicating with each other. Communications may have occurred in the past.

Once a group of users/devices has been determined, targets or parameters for various advertisement campaigns are compared against overlapping attributes of the devices associated with the group of users. Where parameters for campaign(s) overlap with intersecting attributes of the group, the resulting intersection of the three components identifies a set of devices that can be provided with advertisements from a matching campaign. Through the resulting analysis, the devices in the set have the following attributes: they had been actively communicating with another device and there is some logical connection between the advertisement campaign being sent to the users of the devices based on overlapping attribute(s) among the users and / or the devices and the campaign.

Once the group of devices has been identified to receive advertisements from the selected campaign, an embodiment may then attempt to identify further characteristics of the users and / or devices in the group to finesse a selection of advertisements from the campaign that can be sent to the devices. The refinement analysis may be conducted from any criteria, such as analyzing any recent activities of a user and / or device, analyzing preferences associated with the user and / or device, analyzing location and / or movement data associated with the device and analyzing current status data of the devices. Other criteria may be evaluated.

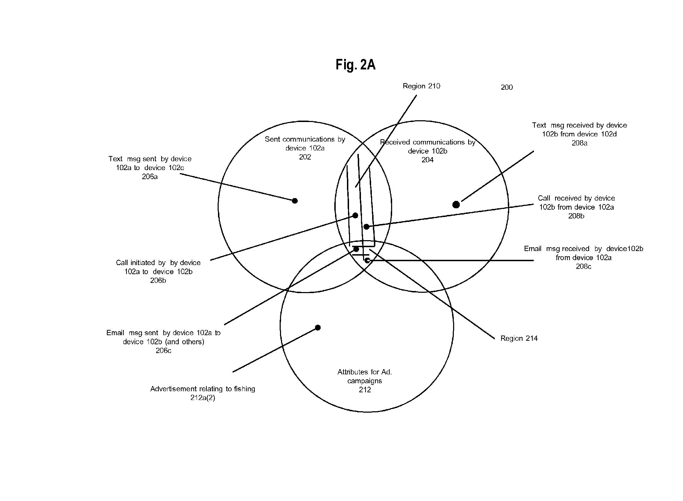

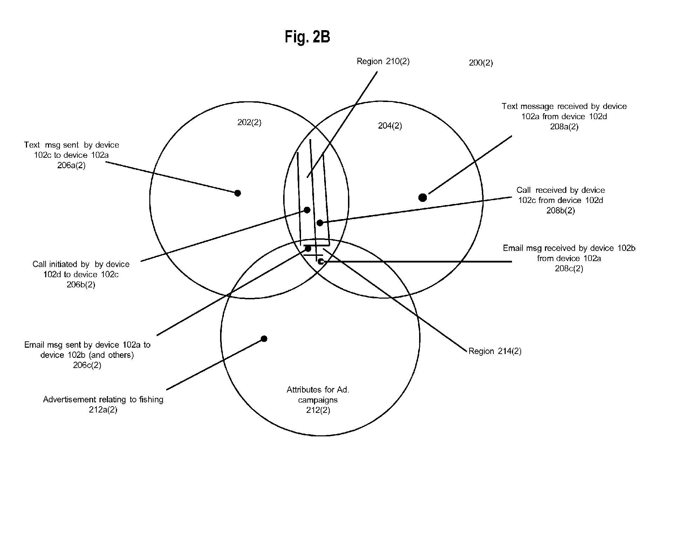

It will be appreciated that the analysis conducted in regards to Figs. 2A and 2B techniques for analyzing overlapping interests. In other embodiments, the characterization and identification of the number and type of overlapping interests may vary among pairs of users and / or related devices. As such, a "cluster" analysis technique to determine sets of devices may use the number of overlapping interests between any two devices as a metric of "proximity" between the two devices to determine clusters of devices that are "close" to each other across all the categories. The cluster analysis may be used in combination with other measures of distance between those two devices, such as the recent frequency of communications between those two devices.

It will be appreciated that the above noted aspects of an embodiment may be conducted in different stages. For example, first an advertisement campaign may be identified and then set(s) of active devices may be identified.

Further detail is provided on an exemplary "push"-based advertisement distribution system of an embodiment. Two exemplary analysis systems are provided in Figs. 2A and 2B.

First, Fig. 2A, illustrates an exemplary analysis of attributes of a group of users of devices. Therein, Venn diagram 200 provides an exemplary intersection of various attributes and communication events of users of devices 102a and 102b from Fig. 1. Each of circles 202 and 204 represents a collection of data points indicating communications sent and / or received by a device at a given time covering a range of interests. Not all data points are shown. Circle 202 represents communications (e.g. voice, email message, text message) sent by device 102a to device 102b. Exemplary data points 206a, 206b and 206c mark communications that were sent by device 102a. The location of a particular data point indicates a particular attribute for that communication, e.g. curling, weather, sports, friends, work, Facebook link, etc. Circle 204 represents communications received by device 102b in system 100. Exemplary data points 208a, 208b and 208c mark communications that were received by device 102b. The location of a particular data point indicates a particular attribute for that communication. As with Venn diagram analysis, where circles 202 and 204 intersect, intersecting region 210 indicates communications sent/received between devices 102a and 102b that share an attribute, such as an area of interest, background information or topic. Data points 206b and 208b can be linked together indicating that device 102a has called device 102c and that the call can be linked to a particular interest. Data points 206c and 208c can be linked together indicating that device 102a has sent an email containing at least device 102b as a recipient and that the email can be linked to a particular interest. Others in the recipient and cc list are not noted here. Time information may be associated with each data point. The contents of circles 202 and 204 may be filtered to restrict messages based on time, parties, size, communication method and other parameters. Note that Fig. 2A shows synchronous (e.g. voice telephone calls) and asynchronous communications (e.g. emails). Synchronous communications may be identified by comparing communication records at each device for matching session parameters (e.g. sender, receiver, time of communication, etc.). Asynchronous communications may be identified by comparing communication a series records (e.g. sequential email messages) at each device for related parameters (e.g. sender, receiver, time of email, etc.). Other Venn diagrams may be provided to map other aspects of communications processed by devices 102.

Diagram 200 may identify sets of users of devices that may wish to view the same advertisement. For example, one reason why a user of a device may wish to view an advertisement may be to "meet up" with a friend in their network. Friends may be determined from data in social networks, such as Facebook.

The interests for the communication may be constrained to specific interests, attributes, parameters and settings. Interests and attributes can cover any topic, such as hobbies, recently read items, favourites, products, brands, likes, dislikes, needs, wants, etc. Such attributes may also be locally stored on the device. Parameters and settings may be stored in the devices or may be derived from data received from the devices (e.g. location information, movement information, network connection information, etc). Attributes may also be identified by examining interests captured in social networking websites (e.g. Facebook settings). Interests may also be determined through content scanning of communications (email, Instant Messaging, Texting, etc) to identify specific keywords to indicated specific interests. Interests indicated through the content scanning engine may be further refined by the user through a preference engine on the device or on a network. Interests may also be further defined by examining the clustering of interests within a user's network of contacts (from address book data, Instant messaging contacts and external social networks data). For example, if a number beyond a predefined threshold of "friends" appear to be interested in a topic (e.g. cooking), then the user of device 102 is also determined to be interested in cooking.

Then attributes of a set of advertising campaigns are compared with the interests of users associated with the communicating devices shown in region 210. Such attributes for advertising campaigns are represented by circle 212. Intersection region 214 shows attributes of advertising campaigns that overlap with interests of users of communicating devices. As such matches in region 214 identifies users that have devices that are communicating with each other and have some deemed attribute that match with attributes of one or more advertising campaigns. As such, advertising campaigns in region 214 may be highly relevant to communicating devices 102a and 102b.

Based on the results of identifying region 212, an embodiment can then send advertisements relating to campaigns captured in region 214 to devices 102a and 102b that are also captured in region 214.

Next, Fig. 2B, provides another exemplary analysis of attributes of a group of devices. Venn diagram 200(2) shows intersections of various attributes and activity levels that have been attributed to a group of devices 102 from Fig. 1. Such attributions may have been made through an analysis of activities of associated users of the devices. Each of circles 202(2) and 204(2) represent a collection of data points indicating communications sent and / or received by a given device at a given time. In particular, circle 202(2) represents communications (e.g. voice, email message, text message) sent by a subset of devices in 102 with one set of attributes. Exemplary data points 206a(2), 206b(2) and 206c(2) mark communications that were sent by devices 102a-c. Circle 204(2) represents communications received by a subset of devices in 102 with a different set of attributes. Exemplary data points 208a(2), 208b(2) and 208c(2) mark communications that were received by devices 102b-102c. Intersecting region 210(2) indicate where communications were sent/received between a set of devices. Data points 206b(2) and 208b(2) can be linked together indicating that device 102d has called device 102c. Data points 206c(2) and 208c(2) can be linked together indicating that device 102b has sent an email containing at least device 102b as a recipient.

Region 210(2) contains data points of communications between devices that have a common attribute. Circle 212(2) shows attributes of a set of advertising campaigns, which are compared with region 210(2). Region 214(2) shows campaigns that overlap with interests of communicating devices. As such in region 214(2) there is an identification of devices that are communicating with each other and have some deemed attribute that match with attributes of one or more advertising campaigns.

As noted, other Venn diagrams can be constructed to illustrate and identify other activity characteristics based on any of one or more parameters relating to time, location, type of communications, activities etc. as needed. The Venn diagrams illustrate graphically how users and / or devices having predetermined activities can be identified. In an implementation, each device 102 may have activity logs for one or more of its applications, which can be scanned and analyzed to determine its recent level of activities. It will be appreciated that the activity analysis may be applied simultaneously to identify devices for two of more advertisement campaigns.

The analysis may be done on a peer-to-peer basis among users of devices 102-102d or it may be conducted from a central element, such as through server 106c. It will be appreciated that in other embodiments, one or more of processes may be performed by applications that are remote to device 102 or on device 102.

Once the activity analysis is complete, an embodiment selects an appropriate format of an advertisement and / or an appropriate advertisement for communicating devices 102 that are to receive advertisements. Thereafter, applications operating on devices 102 then generate the format of the advertisement on devices 102. Advertisement data may be provided as one of, or a combination of, the following data formats: video (e.g..mpg, .avi, .flv, .rm, .wmv, etc.), image (e.g..jpg, .tif, .gif, etc.), audio (e.g..mp3, .ra, .wav, .wma, etc.), flash, html, etc. Device 102 generates the received advertisement data according to the particular format of the data (e.g. video, audio, both). Depending on the advertisement data received, devices 102 may display an advertisement image on their display either with or without audio, display an advertisement video with or without audio, or play only an audio advertisement through their speakers. Advertisements may be generated on devices 102 from data provided to them. Devices 102 may provide tracking data to a central server, such as advertisement server 106c when they have generated the advertisements for advertisement tracking purposes. This tracking data may be sent to another server.

The history/format/frequency/duration of communications between communicating devices may be considered when determining whether to send an advertisement to one or more of the devices and which advertisements to send. For example, consider devices 102a and 102b that were communicating via a telephone call and an email. A telephone call provides a positive indication that the two parties are actively communicating with each other. A single email provides a positive indication that the sender is actively communicating with the recipient. A response provides a positive indication that the recipient is actively communicating. A history of recent emails between two devices provides a positive indication that the two parties are actively communicating with each other. This level of communication for a sender and recipient may be used to determine which device(s) should receive an advertisement and also the format of the advertisement.

For example, different formats of advertisements may be provided to different members in the set of devices depending on the number and type of communications that a device in the set sent or received in a given period of time. Referring back to Fig. 2A intersection region 214 identified that device 102a sent an email to device 102b. However, if device 102b did not subsequently respond to the email (within certain parameters) then a format of the advertisement may be tuned to attempt to reflect that fact. Different formats of an advertisement for an advertising campaign (or different advertisements from different campaigns) may be provided to each of device 102a and 102b depending on the activity analysis. Additional parameters may consider the total number of messages sent, the size of the messages sent and the frequency of the messages sent, within a given time period.

A format for an advertisement for a device may also be determined by identifying an activity context for the user of the device. One context is based on a current state of the user and / or the device. For example, if there is a connection between device 102a and vehicle 120a, then device 102a may output the audio component of an advertisement through speakers of vehicle 120a. In another embodiment, when device 102 is located in vehicle 120a a determination may be made as to whether device 102a is associated with a driver of vehicle 120a or a passenger in the vehicle. The determination may be made by analyzing whether a Bluetooth (trade-mark) connection has been made between electronics in vehicle 120a and device 102a. Alternatively, a software setting may be provided and set to indicate whether device 102a is associated with the driver or a passenger. Accordingly, when an advertisement is provided to device 102a, if device 102a is associated with the driver one format of an advertisement may be provided (e.g. audio only) and if device 102a is associated with a passenger, then another format of the advertisement may be provided (e.g. video with a map and audio). As such, there is a coordination of forms of advertisements provided to the devices 102a in vehicle 120a.

Another activity context may be inferred based on a determined location of a device. The location for a device may be determined using signals from its movement detection module, signals from its global positioning system (GPS), and strength signals of cellular network signals received by device 102, satellite feeds etc. Additionally, device 102 may be connected to vehicle 120 via wire or wireless connection, such as Bluetooth (trade-mark), and device 102 may provide activity/movement information from the vehicle.

If a detected activity context changes for device 102 changes while an advertisement is generated on device 102, a further update message may be sent from device 102 to server 106c and subsequently, server 106c may send a command to stop generating or sending the advertisement or replace the advertisement with another one. Alternatively, the original advertisement provided to device 102 may have a conditional trigger condition flag that is used to determine whether the advertisement is generated on device 102. Device 102 may check the status of the flag and/or cause it to be updated depending on the current detected conditions of device 102.

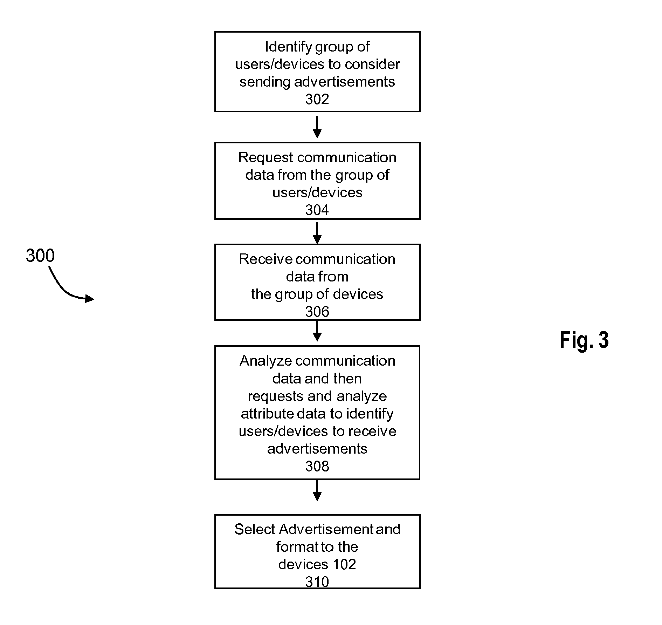

Turning now to Fig. 3, flow chart 300 provides an exemplary progression of processes that advertisement server 106c determine how to identify a set of devices 102 that are to receive an advertisement from a larger group of devices 102. The analysis may incorporate any one or more of the group/set identification parameters noted earlier.

First, at block 302, server 106c determines a group of devices to evaluate for sending parts of an advertisement campaign. The group of devices may be tagged with data to indentify their related interests, preferences or setting for their related devices (e.g. Facebook attributes, network attributes etc.). Then, at block 304, advertisement server 106c requests communication log data from the devices in the group. At block 306, advertisement server 106c receives communication log data from devices 102. The communication log data transmitted by devices 102 may already be in a format that is readable by advertisement server 106c or the data may require processing by interface server 108 and / or advertisement server 106c.

At block 308, server 106c requests additional data that provides contexts to interests, preferences or settings associated with the users of the devices or the devices themselves. The additional data may relate to settings provided from social network websites. The data may include any information, including activity logs, connection status information for connections to any other thing or network (e.g. vehicle 120, network 116 or another device 102 (not shown)), information regarding the location of device 102 (e.g. through GPS data, through analysis of connection data from networks, including cellular networks and IP addresses, etc.), information regarding availability (which may be derived from calendar data), preference settings for applications operating on device 102, time and day information, etc. If the time/day is a weekday, one context may be determined (e.g. at work). For example, if the time/day is a weekend, one context may be determined (e.g. at leisure). The day may also indicate a season (e.g. winter, spring, summer, fall). A context for a device or its user may be inferred from the additional data. For example, an activity state may be derived , such as: driving, passenger in car, walking, at meeting, at home, commuting, leisure time, shopping, etc.

In block 310, once an intersection of attributes of communicating devices 102 with attributes of advertising campaigns is found, server 106c selects an advertisement campaign that matches with the interests/preferences/status and advertisement formats that can be sent to the devices 102. For example, if the attribute identified for the communicating devices relates to fishing then an advertisement relating to boats that is linked to fishing may be provided to the devices. Further, if it is determined that one of the communicating devices 102 is likely associated with a driver of a vehicle, advertisement server 106c may select an audio format of an advertisement for device 102. If the information from device 102 does not indicate a connection between the device and the car, advertisement server 106c may use a derived speed value for device 102 to determine a further context for an advertisement. For example, one or more preset speed thresholds may be set (for example, 50 km/h).

As a summary, notable activities in flow chart 300 are as follows:
- From a universe of users and / or devices, identify a group users and / or devices that have been communicating with each other.
- From the group of users/devices, identify related interests/preferences/settings for the users/devices.
- Optionally, gather additional context data from members in the group. The additional data may indicate movement, location and / or status of the devices.
- For the users/devices in the group, identify communications were provided by devices having at least one mutual attribute. Analyze that attribute against attributes of provided advertisement campaigns. Select campaign(s) that match the attribute. Select appropriate format(s) for the advertisements for the devices, based on the additional data. Provide appropriately selected formats of advertisements to the devices.

It will be appreciated that other processes and blocks may be provided in flow chart 300. Another feature may use calendar application entries accessed by a device to determine, which of the common attributes among the set of users/devices would be most relevant to that group of users/devices a) now, and b) in the near future.

It will be appreciated that in other embodiments, one or more of the processes of the blocks Fig. 3 may be performed by applications that are remote to server 106c. For example, attribute may be performed on a given device 102 and then device 102 may simply provide a message to server 106c indicating its attributes.

Other algorithms may be implemented to match an advertisement to a communication. One algorithm analyzes a particular communication and then further analyzes aspects of the sender and recipient to identify matching attributes. Therein, when a communication is initiated by a device, a record of the communication may be sent or analyzed by server 106c to identify the recipients and any contexts for the communication. If the communication is an email or text message, a context may be determined from the subject line or the contents of the message. As the sending device is known, the interests of the sending party can then be determined. This may be determined by examining any associated social network parameters, and / or any settings or preferences associated with the device or its applications. Next, for each recipient of the communication, a related attribute analysis may be conducted. Where interests/preferences/settings of a receiving device match the sending device, server 106c may then initiate a query to find any advertisements in a database of advertisement campaigns that match the interest/preference/setting.

Now, further detail is provided on formats of advertisements. Server 106c may have an associated database 122 that stores advertisements and formats. Table A below provides an exemplary matrix of advertisement formats and conditions on which a particular format / advertisement is to be sent to a particular device 102. A given format for an advertisement may be composed of one or more different audio/visual components. An audio component may be a voice and / or music generated on a speaker of device 102. A visual component may be a static image, a video, a banner, text or any graphical element generated on a display of device 102.

**Table A**

| Advertisement | Activity Context of Device 102 | | | | |
|---|---|---|---|---|---|
| | Driving | Passenger in Car | Walking | At Meeting | Leisure Time |
| Advertisement 1 | Audio only | Audio + Visual | Audio + Visual | SMS only | none |
| Advertisement 2 | Audio #1 only | Audio #2 only | Audio #2 only | Video only | none |
| Advertisement 3 | Audio only | Visual #1 | Audio + Visual | Audio + Visual | Audio + Visual |
| Advertisement 4 | Email only | Audio only | Audio + Visual | Visual only | Email only |
| Advertisement 5 | SMS message only | SMS + Visual | Audio + Visual | Audio + Visual | Audio + Visual |
| Advertisement 6 | none | Audio + Visual | Audio + Visual | Audio + Visual | none |
| Advertisement 7 | voice mail | Visual only | Audio + Visual | email only | none |
| Advertisement 8 | none | none | Audio only | none | Audio + Visual |
| Advertisement 9 | Audio only | Audio only | Audio + Image | Audio + Visual | Audio + Visual |
| Advertisement 10 | Audio + Visual #1 | Audio + Visual #2 | Audio + Visual #3 | | |
| Advertisement 11 | Audio only | Audio + Visual #2 | Visual only | none | text |
| Advertisement 12 | Audio + Visual | Audio + Visual | Audio only | | |

The data in Table A may be stored in database 122 and may be periodically updated. A corresponding list of attributes for each advertisement campaign may also be stored in database 122. This corresponding list can be compared against the deemed attributes of the group of devices 102 that were identified as communicating with each other in order to attempt to identify a suitable campaign that matches the attribute(s) of the devices.

In another embodiment, a given format of an advertisement may be provided to device 102 depending on a determined relevance for device 102, based on the movement data and / or other status indicators and / or information associated with device 102. For example, using GPS location information of device 102, advertisement server 106c may identify an advertisement for device 102 promoting a retail outlet that device 102 is near offering a particular ware, service or event provided by the outlet. The direction of movement of device 102 may also be used (e.g. north, south, east, west, etc.). This direction information may be used to filter advertisements (e.g. if travelling north, then only provide advertisements for proximate entities that are on the east side of the street being travelled on). Advertisement server 106c may also select advertisement content based on the preferences of the user of device 102. The preferences of the user may be derived from a number of sources, including the user's device settings and subscriptions (e.g. Really Simple Syndication, Rich Site Summary, etc.), and the user's event history stored on device 102. For example, the user's preferences may indicate an interest in sports and, based on this information, advertisement server 106c may choose to send advertisements relating to sporting goods, services and events to the user's device 102.

In yet another embodiment, advertisement server 106c may utilize peer-identification information from device 102. For example, for vehicle 120a, device 102a may be used by its driver. There may be multiple devices 102c, 102d, etc. also in vehicle 120a and device 102a may identify other nearby devices 102c, 102d, etc. by obtaining identification data from the nearby devices using RFID, Bluetooth (trade-mark) connection, or other communication links. Advertisement server 106c may request peer-identification from device 102a. The data provided by device 102a may serve as a sufficient indicator for advertisement server 106c of the movement of peer devices 102c, 102d, etc. This may be useful in a situation where the peer devices have no movement detection capabilities. Using the peer-identification data, advertisement server 106c may selectively transmit advertisement data to peer devices 102c, 102d, etc. In a further embodiment, advertisement server 106c may synchronize the transmission of advertisement data to a group of devices 102, 102c, 102d, etc. travelling in the same vehicle 120a, such that the devices in the group generate the same advertisement at the same time to their respective users. In a further embodiment, the synchronization of advertisement may differentiate between device 102a that belongs to the driver and the devices 102c, 102d of the passengers such that different formats of an advertisement are provided to the driver and the passengers. For example, the passenger devices may receive a format that includes a visual component of the advertisement, while the driver's device 102a would not receive the same visual component.

Status indicators may also be provided from settings stored in device 102 associated with a user's preferences. Such preferences can indicate any one or more of the following settings: current time zone, current home telephone number, preference for salutations (e.g. Ms./Mr., etc.), base font, base ring tone, base colour scheme for GUI, base communication enunciators, base communications preferences (e.g. Wi-Fi first, Wi-Fi only), etc. Any one or more of these indicators can be used to infer another state of mind for the user. Such preferences are typically provided in a user's GUI operating on device 102, allowing changes to be made thereto. An embodiment is provided with access to this data to perform a part of a state of mind analysis.

Additional status indicators may be provided from data from applications operating on device 102. For example, a calendar application (described later) may provide current location and status information about a user of device 102. Similarly a GPS application may provide current location information about device 102. Data from other applications may be used. The applications may operate remotely to device 102 yet still provide a status indicator relating to device 102.

It will be appreciated that one or more of the above noted analyses may be combined, and weighted as a more detailed analysis of the current state of mind of the user of device 102.

It will be appreciated that functions and operations described above for device 102 (and server 106c) in Figs. 2A, 2B and 3 may be reconfigured to be performed by its counterpart component (namely a function conducted by device 102 may be conducted on server 106c and vice versa) or on another component in system 100. Appropriate message and command structures may be provided to synchronize functions among the components.

In creating an advertisement format for distribution to device 102, server 106c may provide a command to another server to initiate a communication to device 102 that contains a message containing an advertisement destined for device 102. For example, if a format of an advertisement is as an email or voicemail, server 106c may send a command to server 106d or 106b to send a message containing text or a voice message containing the advertisement and request that server 106d or 106b send an appropriate message containing same to device 102.

It will be appreciated that in one embodiment, the advertisement server may provide these functions through software, hardware and / or firmware operating on or with its microprocessor. The interface server has a communication connection to the servers in the network; and a second communication link to the electronic device. The interface server may have a device communication module that, through instructions provided to the microprocessor, receives the request from the device for access to one or more services or servers; and generates and sends a response to the request for access to the device. The interface server may also have a server communication module to analyze a status of at least one capability of the electronic device; generate and send a set of access requests to a set of servers of the one or more services or servers that it can access; monitor for responses from the servers; extract access information from said the responses; and process the access information for the response for the device. The interface server produces the set of access requests from an analysis of said status of at the capabilities of the electronic device.

Once an analysis of the set of devices 102 has been identified, advertisement server 106c builds and sends individual advertisements to members in the set.

In another embodiment, a "pull"-based advertisement system may be provided. Therein, one or more aspects of the activity analysis and advertisement analysis may be provided in whole or in part on devices 102 and once the analysis is complete, devices 102 may send a request for a specific format of an advertisement from server 106c. The activity analysis may be conducted through sharing of current activity levels within the group members to identify devices that meet predetermined activity thresholds.

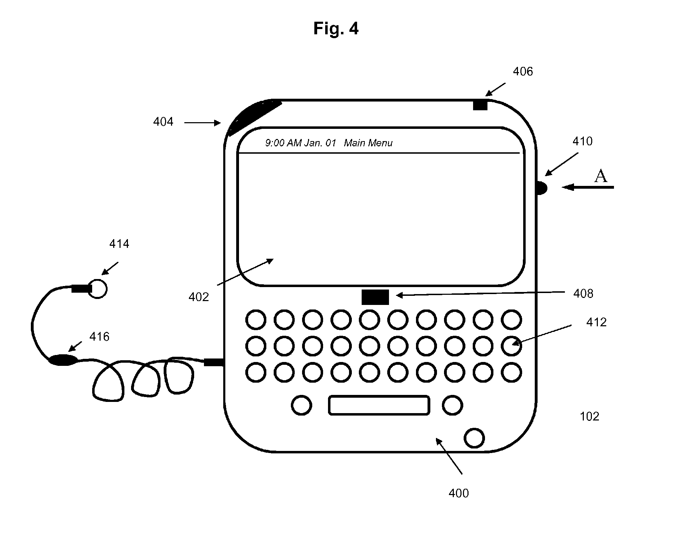

Further detail is now provided on components of device 102 that are related to processes relating to an embodiment. Referring to Fig. 4, electronic device 102 is based on a computing platform having functionality of an enhanced personal digital assistant with cellphone and e-mail features. It is, however, to be understood that electronic device 102 can be based on construction design and functionality of other electronic devices, such as smart telephones, desktop computers, pagers or laptops having telephony equipment. In a present embodiment, electronic device 102 includes a housing 400, an LCD 402, speaker 404, an LED indicator 406, touchpad 408, an ESC ("escape") key 410, keypad 412, a telephone headset comprised of an ear bud 414 and a microphone 416. Touchpad 408 and ESC key 410 can be inwardly depressed as a means to provide additional input to device 102. ESC key 410 may be depressed along the path of arrow "A". A trackball may be provided (not shown).

It will be understood that housing 400 can be made from any suitable material as will occur to those of skill in the art and may be suitably formed to house and hold all components of device 102.

Device 102 is operable to conduct wireless telephone calls, using any known wireless phone system such as a Global System for Mobile Communications (GSM) system, Code Division Multiple Access (CDMA) system, CDMA 2000 system, Cellular Digital Packet Data (CDPD) system and Time Division Multiple Access (TDMA) system. Other wireless phone systems can include Bluetooth (trade-mark) and the many forms of 802.11 I wireless broadband, like 802.11a, 802.11b, 802.11g, etc. that support voice. Other embodiments include Voice over IP (VoIP) type streaming data communications that can simulate circuit-switched phone calls. Ear bud 414 can be used to listen to phone calls and other sound messages and microphone 416 can be used to speak into and input sound messages to device 102.

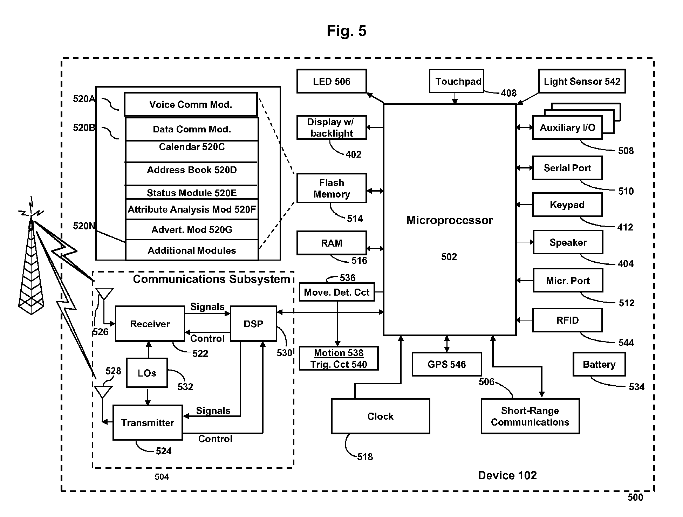

Referring to Fig. 5, functional components of device 102 are provided in schematic 500. The functional components are generally electronic, structural or electromechanical devices. In particular, microprocessor 502 is provided to control and receive almost all data, transmissions, inputs and outputs related to device 102. Microprocessor 502 is shown schematically as coupled to keypad 412 and other internal devices. Microprocessor 502 preferably controls the overall operation of the device 102 and its components. Exemplary microprocessors for microprocessor 502 include microprocessors in the Data 950 (trademark) series, the 6200 series and the PXA900 series, all available at one time from Intel Corporation. Microprocessor 502 is connected to other elements in device 102 through a series of electrical connections to its various input and output pins. Microprocessor 502 has an IRQ input line which allows it to receive signals from various devices. Appropriate interrupt firmware is provided which receives and reacts to the signals detected on the IRQ line.

In addition to the microprocessor 502, other internal devices of the device 102 are shown schematically in Fig. 5. These include: display 402; speaker 404; keypad 412; communication sub-system 504; short-range communication sub-system 506; auxiliary I/O devices 508; serial port 510; microphone port 512 for microphone 416; flash memory 514 (which provides persistent storage of data including local data relating to the status flags used by an embodiment); random access memory (RAM) 516; clock 518 and other device sub-systems (not shown). Device 102 is preferably a two-way radio frequency (RF) communication device having voice and data communication capabilities. In addition, device 102 preferably has the capability to communicate with other computer systems via the Internet. Device 102 may have a SIM card (not shown).

Operating system software executed by the microprocessor 502 is preferably stored in a computer-readable medium, such as flash memory 514, but may be stored in other types of memory devices, such as read-only memory (ROM) or similar storage element. In addition, system software, specific device applications, or parts thereof, may be temporarily loaded into a volatile store, such as RAM 516. Communication signals received by the mobile device may also be stored to RAM 516.

Microprocessor 502, in addition to its operating system functions, enables execution of software applications on device 102. A set of software (or firmware) applications, generally identified as applications 520, that control basic device operations, such as voice communication module 520A and data communication module 520B, may be installed on the device 102 during manufacture or downloaded thereafter. Calendar application 520C and address book application 520D provide useful tracking tools for the user of device 102. Data from the calendar application 520C may be used in an embodiment to determine a context for a state of movement for device 102. Calendar application 502C may also process and also provide information on an expected state of activity of device 102 in the near future. Status module 520E monitors and evaluates the status of various capabilities of device 102 (e.g. its communication connections, battery power, available memory) and updates data stored on device 102 with this information. Module 520E may also generate and send communications to external devices (such as interface server 108) regarding this information on a periodic basis or as statuses change. Attribute analysis module 520F analyzes interest and activity data for device 102. It receives data from settings and preferences provided from internal and external sources, such as social network sites and settings for applications operating on device 102. Module 502F may combine calendar application data with the other sources of information to produce a refined view of the device's activity state, both now and in the future. Module 520F may also analyze data from components of device 102, such as movement detection circuit 536, motion circuit 538 and trigger circuit 540, GPS module 645, RFID module 544, communication module 504, short-range communication sub-system 506, time and calendar data, etc. The data collectively can be used to determine whether device 102 is moving, the direction of movement, the speed of the movement, the location of device and what type of terrain the device is on (roads, railways, water, off-road, etc.). Override (hardware/software) data and switch settings may also be used to determine the interests and activity contexts of device 102. Module 520F may provide status messages to server 106c or other external devices, based on received requests or changes in activity and / or movement status. Module 520F may impose thresholds on the activity and / or movement data before sending such status messages. Module 520F may generate and send communications to external devices (such as interface server 108 or server 106c) regarding this data on a periodic basis, on a per-request basis, or as the device's activity and / or movement changes. Advertisement processing module 520G receives and extracts any components of advertisements provided to device 102 and provides the components to the proper output devices (e.g. display 402, speaker 404). If a component of an advertisement is provided as an email, then data communication module 520B will process same. As well, additional software modules, such as software module 520N, which may be for instance a personal information manager (PIM) application, may be installed during manufacture or downloaded thereafter into device 102. Data associated with each application can be stored in flash memory 514.

Data communication module 520B may comprise processes that implement features, processes and applications for device 102 as provided and described earlier, allowing device 102 to generate track status of various components of device 102 and to generate and send messages to external devices (such as interface server 108).

Communication functions, including data and voice communications, are performed through the communication sub-system 504 and the short-range communication sub-system 506. Collectively, sub-systems 504 and 506 provide the signal-level interface for all communication technologies processed by device 102. Various applications 520 provide the operational controls to further process and log the communications. Communication sub-system 504 includes receiver 522, transmitter 524 and one or more antennas, illustrated as receive antenna 526 and transmit antenna 528. In addition, communication sub-system 504 also includes processing modules, such as digital signal processor (DSP) 530 and local oscillators (LOs) 532. The specific design and implementation of communication sub-system 504 is dependent upon the communication network in which device 102 is intended to operate. For example, communication sub-system 504 of device 102 may operate with the Mobitex (trade-mark), DataTAC (trade-mark) or General Packet Radio Service (GPRS) mobile data communication networks and also operate with any of a variety of voice communication networks, such as Advanced Mobile Phone Service (AMPS), Time Division Multiple Access (TDMA), Code Division Multiple Access (CDMA), CDMA 2000, Personal Communication Service (PCS), Global System for Mobile Communication (GSM), etc. Other types of data and voice (telephonic) networks, both separate and integrated, may also be utilized with device 102. In any event, communication sub-system 504 provides device 102 with the capability of communicating with other devices using various communication technologies, including instant messaging (IM) systems, text messaging (TM) systems and short message service (SMS) systems.

In addition to processing communication signals, DSP 530 provides control of receiver 522 and transmitter 524. For example, gains applied to communication signals in receiver 522 and transmitter 524 may be adaptively controlled through automatic gain-control algorithms implemented in DSP 530.

Short-range communication sub-system 506 enables communication between device 102 and other proximate systems or devices, which need not necessarily be similar devices. For example, the short-range communication sub-system may include an infrared device and associated circuits and components, or a Bluetooth (trade-mark) communication module to provide for communication with similarly enabled systems.

Powering the entire electronics of the mobile handheld communication device is power source 534. In one embodiment, the power source 534 includes one or more batteries. In another embodiment, the power source 534 is a single battery pack, especially a rechargeable battery pack. A power switch (not shown) provides an "on/off" switch for device 102. A power source interface (not shown) may be provided in hardware, firmware, software or a combination of such elements to selectively control access of components in device 102 to power source 534. Upon activation of the power switch an application 520 is initiated to turn on device 102. Upon deactivation of the power switch, an application 520 is initiated to turn off device 102. Power to device 102 may also be controlled by other devices and by software applications 520. Other components in device 102 include light sensor 542. RFID module 544 may include an RFID transponder and / or an RFID reader.

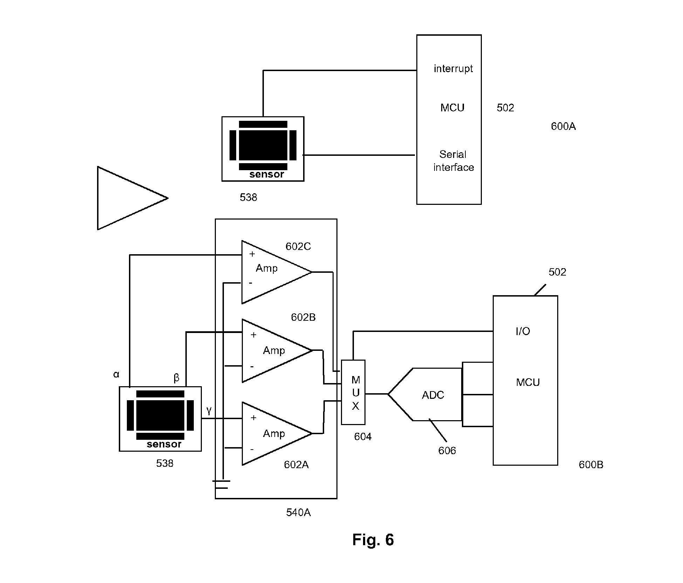

Referring to Fig. 6, with some algorithms of an embodiment described, further detail is provided on how aspects of the embodiment are implemented in device 102 through movement detection circuit 536 and its related components. Therein, two sensors arrangements for device 102 are shown. Circuit 600A shows sensor 538 directly connected to the interrupt and serial interface input lines of microprocessor 502. Accordingly, software operating on microprocessor 502 is provided to selectively monitor signal(s) from sensor 538 to determine when movement of device 102 has been detected. The circuit between sensor 538 and microprocessor 502 can be considered to be one version of circuit 536. Software operating on microprocessor 502 determines when a notable signal has been generated by sensor 238. Circuit 600B shows sensor 538 connected to trigger circuit 540A having two differential comparators 602A and 602B, which then have their outputs attached to an analog mux 604. The mux selectively provides its output according to a control signal generated by microprocessor 502. The analog output of mux 604 is converted to a set of digital signals by analog to digital converter 606, which then provides the output to microprocessor 502. As with other implementation, software operating on microprocessor 502 determines when a notable signal has been generated by sensor 538. Reading of positions determined by the software can be stored in memory 514 or 516. The software can also create an average reading of the movement readings. This average reading can be used to determine when device 102 is in a resting position or when it is effectively in a resting position (e.g. it is being moved only in inconsequential amounts).

For any embodiment, a low-g MEMS (micro-electromechanical system) accelerometer may be used for motion sensor 538. Further, the accelerometer may be of almost any type, including a capacitive, piezoelectric, piezoresistive, or a gas-based accelerometer. An exemplary low-g MEM accelerometer is a LIS302DL tri-axis digital accelerometer, available from STMicroelectronics of Geneva, Switzerland. Accelerometers sense and convert an acceleration detected from a motion (e.g. tilt, inertial, or vibration) or gravity into an electrical signal (producing a corresponding change in output) and are available in one, two or three axis configurations. Accelerometers may produce digital or analog output signals.

Since an accelerometer detects a change in velocity, in order to use an accelerometer to detect a certain speed, signals from an accelerometer may be used to detect velocity changes, which are then analyzed to determine whether an underlying given (average) speed is associated with the changes. In a moving vehicle, for example, as the device is moving, different accelerations may be detected as the vehicle speeds up (perhaps from a stop), slows down (perhaps to a stop) and turns corners during the driving. These velocity changes can be mapped against predetermined speed levels which then can be used to select given formats of advertisements.

To improve sensitivities of an accelerometer when it is used as motion sensor 538, its outputs can be calibrated to compensate for individual axis offset and sensitivity variations. Calibrations can also be performed at the system level, providing end-to-end calibration. Calibrations can also be performed by collecting a large set of measurements with the device in different orientations. It will be appreciated that other circuits using different combinations of sensors and triggering components and threshold detectors may be used to provide functionalities of sensor 538 and circuit 540.

In other embodiments, motion sensor 538 may be substituted or combined with a different device, such as a spring-loaded switch, a tilt switch, a gyroscope, a mercury switch, GPS module 546 or any other device which can generate a signal responsive to movement or change in orientation of device 102. It is preferable that the device have low quiescent power draw characteristics.

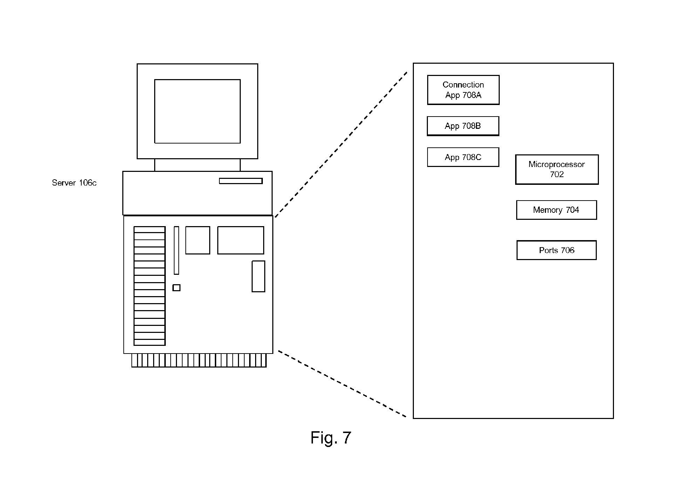

Now, further detail is provided on features of server 106c. Referring to Fig. 7, general features of server 106c for processing electronic communications in accordance with an embodiment are shown. In an embodiment, server 106c is based on a general purpose computing platform. It may have the form factor of a desktop or laptop computer. It may be a minicomputer. In a present embodiment, computer 106c includes main processing station 700. Internally, server 106c has microprocessor 702 and memory 704. Connection ports 706 provides one communication connection system to allow server 106c to connect to with network 104, providing access to device 102 and other devices. Applications 708 are software that execute on microprocessor 702 and may be stored in memory 704 as database 122. Advertisement campaigns and their associated attribute data may be stored in database 122.

Applications 708 control basic operations of computer 116, including ports 706. Connection application 708A provides the connection-level communication between server 106c and other elements in network 104, such as interface server 108 to ultimately allow access to processing of emails, IMs, data and other data transmission through server 108. Interest/activity context analysis application 708B initiates requests data to identify interests/preferences/settings relating to devices 102 and to determine an activity contexts for devices 102. It will be appreciated that an attribute analysis may be conducted by one or more modules in server 106c and device 102. When advertisements are selected by server 106c, device 102 may perform an attribute analysis or may provide relevant data (position, movement, near-future calendar entries, current communication links, etc.) to server 106c, wherein server 106c performs the analysis. Then, application 708B may receives interest and activity context data from devices 102 to determine a group of devices that are to be sent advertisements. Once interest and activity contexts for the devices are determined, advertisement selection application 708C selects and sends an advertisement to device 102 based on certain conditions (e.g. per Table A). Additionally, advertisements may be sent to device 102 depending on other scheduling and trigger conditions. Application 708B may initiate a command destined for another application server 106 (such as email server 106d or voice mail server 106b) to send a message containing a provided advertisement to device 102. As such, applications 708A-C execute processes for server 106c as described in Fig. 3.

In another embodiment, devices in a network may periodically send data to advertisement server 106c identifying their attributes.

The embodiments have been described for a system that provides an interface server to provide intermediary processing of communications between a device and servers in a network. It will be appreciated that embodiments may implement the features in any communication protocol or system. It will be appreciated that any features of interface server as described herein may be incorporated into a device or a component of another server in network 104.

It will be appreciated that the embodiments relating to devices, servers and systems may be implemented in a combination of electronic hardware, firmware and software. The firmware and software may be implemented as a series of processes, applications and/or modules that provide the functionalities described herein. The algorithms and processes described herein may be executed in different order(s). Interrupt routines may be used. Data may be stored in volatile and non-volatile devices described herein and may be updated by the hardware, firmware and/or software. Other network embodiments may use non-client server architectures for management of communications.

It will be appreciated that a system and method in accordance with an embodiment can address a technical problem of how to provide common data items to a plurality of mobile telecommunication devices within a mobile telecommunication network through a push or pull mechanism. By selecting individual sets of two or more devices from the plurality of available devices operating within the network based on shared attributes between two or more communicating devices, an embodiment may enable the specific distribution of appropriate data items to those selected devices. This selective targeting of the devices and / or content may provide a reduction in the overall traffic within the network as it can obviate or reduce the need to push (or pull) data items to all devices operating in the network, rather data items are distributed to those devices whose attributes match a predefined attribute type. Furthermore, the matching of the nature of the data items that is sent to the attributes may further provide reduction in traffic within the network as the data items that are pushed (or pulled) are pre-filtered prior to their distribution to targeted mobile devices.

As used herein, the wording "and / or" is intended to represent an inclusive-or. That is, "X and / or Y" is intended to mean X or Y or both.

In this disclosure, where a threshold or measured value is provided as an approximate value (for example, when the threshold is qualified with the word "about"), a range of values will be understood to be valid for that value. For example, for a threshold stated as an approximate value, a range of about 25% larger and 25% smaller than the stated value may be used. Thresholds, values, measurements and dimensions of features are illustrative of embodiments and are not limiting unless noted. Further, as an example, a "sufficient" match with a given threshold may be a value that is within the provided threshold, having regard to the approximate value applicable to the threshold and the understood range of values (over and under) that may be applied for that threshold.

The present disclosure is defined by the claims appended hereto, with the foregoing description being merely illustrative of embodiments of the present disclosure. Those of ordinary skill may envisage certain modifications to the foregoing embodiments which, although not explicitly discussed herein, do not depart from the scope of the present disclosure, as defined by the appended claims.

## Claims

1. A method for distributing messages to electronic devices, said method comprising:
identifying two devices that have been communicating with each other and that have at least one common attribute;
identifying an advertisement campaign that matches said at least one common attribute; and
transmitting a set of advertisements relating to said advertisement campaign to said two devices.

2. The method for distributing messages to electronic devices as claimed in claim 1, further comprising:
utilizing additional data relating to said two devices to determine an activity state for at least one of said two devices; and
identifying a format of an advertisement in said advertisement campaign to be included in said set of advertisements based on said additional data.

3. The method for distributing messages to electronic devices as claimed in claim 1 or 2, wherein said at least one common attribute:
relates to a preference provided from a social network site, and/or
is a threshold of common contacts shared by users of accounts for said social network site for the two devices.

4. The method for distributing messages to electronic devices as claimed in claim 1, wherein after transmitting said advertisement to said device, said advertisement is generated on said device.

5. The method for distributing messages to electronic devices as claimed in any preceding claim comprising identifying a group associated with each of the first and second devices,and wherein a first member in said group is provided with a first advertisement based on its activity state and a second member in said group is provided with a second advertisement based on its activity state.

6. The method for distributing messages to electronic devices as claimed in any preceding claim, wherein said identifying two devices that have been communicating with each other and that have at least one common attribute comprises:
examining a record of a communication is sent by a sending device to identify the recipients of said communication;
identifying an attribute associated with said sending device;
identifying a receiving device of said communication;
determining whether said receiving device has a matching attribute to said attribute associated with said sending device; and
identifying said sending device and send receiving device as said two devices if said receiving device has a matching attribute to said attribute associated with said sending device.

7. The method for distributing messages to electronic devices as claimed in claim 6, wherein said identifying an advertisement campaign that matches said at least one common attribute comprises initiating a query to find an advertisement in a database of advertisement campaigns that matches said at least one common attribute.

8. The method for distributing messages to electronic devices as claimed in claim 5, wherein
an activity state for said first member relates to a location of said first member, or
an activity state for said first member relates to movement data of said first member.

9. The method for distributing advertisements to electronic devices as claimed in claim 8 wherein said activity state for said first member relates to movement data of said first member and further wherein:
if said movement data indicates movement of said first member that exceeds a speed threshold then said advertisement includes an audio component; and
if said movement data indicates movement of said first member that does not exceed said speed threshold then said advertisement provides audio and visual components.

10. The method for distributing advertisements to electronic devices as claimed in claim 9, wherein:
if said activity state indicates that said first member is associated with a driver of a vehicle then said advertisement includes only an audio component.

11. The method for distributing messages to electronic devices as claimed in claim 5, wherein said identifying two devices that have been communicating with each other and that have at least one common attribute comprises:
using cluster analysis to identify said two devices from a larger group of devices to analyze a number of overlapping interests between any two devices in the larger group to identify the two devices.

12. The method for distributing messages to electronic devices as claimed in any preceding claim, wherein said two devices have been communicating through asynchronous communications or through synchronous communications.

13. A server for distributing messages to electronic devices, said server comprising:
an activity analysis module for identifying two devices that have been communicating with each other and that have at least one common attribute; and identifying an advertisement campaign that matches said at least one common attribute; and
an advertisement transmission module for transmitting a set of advertisements relating to said advertisement campaign to said two devices.

14. The server for distributing messages to electronic devices as claimed in claim 13, wherein said activity analysis module:
utilizes additional data relating to said two devices to determine an activity state for at least one of said two devices; and
identifies a format of an advertisement in said advertisement campaign to be included in said set of advertisements based on said additional data.

15. The server for distributing messages to electronic devices as claimed in claim 13 or 14, the server being configured to carry out the method steps of any one of claims 1 to 12,

## Amended claims

### Amended claims in accordance with Rule 137(2) EPC.

**1.** A method for distributing messages to electronic devices, said method comprising:
identifying first and second devices that have been communicating with each other from a larger group of devices (302, 304);
utilizing additional data relating to said first and second devices to determine an activity state for said first device (308);
identifying an advertisement campaign that matches said activity state (308);
identifying a first advertisement in said advertisement campaign for said first device based on at least said activity state (308);
identifying a second advertisement in said advertisement campaign for said second device (308); and
transmitting said first and second advertisements to said first and second devices (310).

**2.** The method for distributing advertisements to electronic devices as claimed in claim 1, wherein:
a common attribute is identified from overlapping interests for said first and second devices after analyzing a number of overlapping interests between any two devices in the larger group.

**3.** The method for distributing advertisements to electronic devices as claimed in claim 1 or 2, wherein:
identifying said first advertisement in said advertisement campaign for said first device further comprises utilizing a location or a movement state for said first device;
identifying said second advertisement in said advertisement campaign for said second device comprises utilizing a location or a movement state for said second device.

**4.** The method for distributing advertisements to electronic devices as claimed in claim 3, wherein:
if said movement state indicates movement of said first device that exceeds a speed threshold then said first advertisement includes an audio component; and
if said movement state indicates movement of said first device that does not exceed said speed threshold then said first advertisement includes audio and visual components.

**5.** The method for distributing advertisements to electronic devices as claimed in claim 4, wherein:
if said first device is determined to be currently associated with a driver of a vehicle then said first advertisement includes only an audio component.

**6.** The method for distributing messages to electronic devices as claimed in any one of claims 2 or claims 3 to 5, when depending on claim 2, wherein said common attribute:
relates to a preference provided from a social network site, and/or
is a threshold of common contacts shared by users of accounts for said social network site for said first and second devices.

**7.** The method for distributing messages to electronic devices as claimed in any one of claims 1 to 6, wherein said identifying first and second devices that have been communicating with each other further comprises:
examining a record of a communication sent by a sending device to identify recipients of said communication;
identifying an attribute associated with said sending device;
identifying a receiving device of said communication;
determining whether said receiving device has a matching attribute to said attribute associated with said sending device; and
identifying said sending device and receiving device as said first and second devices if said receiving device has a matching attribute to said attribute associated with said sending device.

**8.** The method for distributing messages to electronic devices as claimed in any one of claim 2 or claims 3 to 7 when depending on claim 2, wherein said identifying an advertisement campaign that matches said common attribute comprises initiating a query to find an advertisement in a database of advertisement campaigns that matches said common attribute.

**9.** The method for distributing messages to electronic devices as claimed in any preceding claim, wherein after transmitting said advertisement to said device, said advertisement is generated on a display of said device.

**10.** The method for distributing messages to electronic devices as claimed in any preceding claim, wherein said first and second devices have been communicating through asynchronous communications or through synchronous communications.

**11.** The method for distributing messages to electronic devices (102) as claimed in any one of claims 1 to 10, wherein identifying said set of devices utilizes peer identification information from said given device, wherein optionally, said peer identification information is provided from radio frequency identification (RFID) or data from a Bluetooth connection for said given device.

**12.** A server (106C) for distributing messages to electronic devices (102), said server (106C) comprising:
an activity analysis (708B; 708C) module for identifying
first and second devices that have been communicating with each other and that have a common attribute from a group of devices;
an advertisement campaign that matches said common attribute utilizing an activity state for one of the first and second devices;
a first advertisement in said advertisement campaign for said first device based on a location or a movement state for said first device; and
identifying a second advertisement in said advertisement campaign for said second device based on a location or a movement state for said second device;
and
an advertisement transmission module (708C) for transmitting a set of advertisements
relating to said advertisement campaign to said first and second devices,
wherein said server (106C) is configured to carry out the method steps of any one of claims 1 to 11.
